# EUROPEAN PATENT APPLICATION

(11) **EP 1 788 754 A2**
(43) Date of publication of application: **23.05.2007**
(21) Application number: 06023761.7
(22) Date of filing: 15.11.2006
(51) Int. Cl.: H04L 12/56, H04L 29/06

(54) **Mobile communication terminal for wireless internet access and wireless internet access method**

(30) Priority: 16.11.2005 KR 20050109512
(71) Applicant: LG - Nortel Co., Ltd., 679, Yeoksam-dong Gangnam-gu Seoul (KR)
(72) Inventor: Lee, Jung Hyun, Seoul 110-101 (KR)
(74) Representative: Katérle, Axel

(57) **Abstract**

Embodiments of the present invention may provide a mobile communication apparatus and a wireless Internet access method by the mobile communication apparatus for using a wireless Internet environment. The mobile communication apparatus may store authenticating information issued from an official certificate authority. When Internet access is requested, the mobile communication apparatus may access an official certificate proxy server and receive an instant key from the official certificate proxy server. The mobile communication apparatus may access the Internet site with the instant key. The official certificate proxy server may perform certification of the mobile communication apparatus based on the stored authenticating information. The official certificate proxy server may further access the requested Internet site and perform certification of the site. The official certificate proxy server may create the instant key shared by the mobile communication apparatus and the Internet site to transmit the created instant key to the mobile communication apparatus.

## Description

The present application claims priority from Korean Patent Application 10-2005-109512, filed November 16, 2005, the subject matter of which is incorporated herein by reference.

### BACKGROUND

### 1. Field

Embodiments of the present invention may relate to a mobile communication apparatus and/or to a wireless Internet access method. Embodiments of the present invention may relate to a wireless Internet access method that accesses an Internet site with an instant key issued from an official certificate proxy server based on authenticating information stored in a mobile communication apparatus.

### 2. Background

Wireless Internet access may refer to Internet access performed according to a mobile communication operation. Internet access may be performed with mobile equipment such as a mobile communication terminal, a personal digital assistant (PDA), or a mobile system such as a mobile large area network (LAN), a Bluetooth, etc. Wireless Internet access may enable users to use Internet services at any time and in any place. For a mobile communication terminal, wireless Internet access may be serviced by an Internet browser embedded in the mobile communication terminal or may be serviced by a notebook computer using the mobile communication terminal as a wireless modem. For a wireless LAN, wireless Internet access may be serviced via a wireless LAN card, for example. Bluetooth may be mounted on mobile Internet equipment for wireless Internet access.

### BRIEF DESCRIPTION OF THE DRAWINGS

Arrangements and embodiments may be described in detail with reference to the following drawings in which like reference numerals refer to like elements and wherein:

FIG. 1 illustrates a mobile communication system having a certification scheme for wireless Internet access according to an example arrangement;

FIG. 2 illustrates a mobile communication system to create an instant key for wireless Internet access according to an example embodiment of the present invention; and

FIG. 3 is a flow chart showing a wireless Internet access method performed in a mobile communication system according to an example embodiment of the present invention.

### DETAILED DESCRIPTION

A detailed description may be provided with reference to accompanying drawings. One of ordinary skill in the art may realize that the following description is illustrative only and is not in any way limiting. Other embodiments of the present invention may readily suggest themselves to such skilled persons having the benefit of this disclosure.

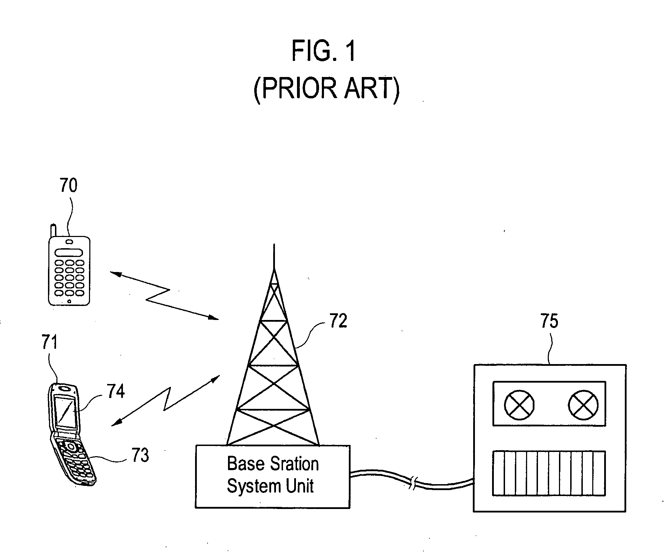

FIG. 1 illustrates a mobile communication system having certification scheme for wireless Internet access according to an example arrangement. Other arrangements may also be used.

As shown in FIG. 1, a mobile communication system may include mobile communication terminals 70, 71 for transmitting/receiving a CDMA signal and performing Internet access according to a certification method. The mobile communication system may further include a base station system unit 72 processing the CDMA signal from the mobile communication terminals 70, 71 and transmitting a received signal from a system (e.g., an external system) to the terminals 70, 71. The base station system unit 72 may process information in a channel regarding the terminals 70, 71 located in a sector.

When power is supplied, the terminal 70 may initialize to form necessary information in an internal memory and to read parameters. After the initialization of the terminal 70, the terminal 70 may receive necessary information including time data via a pilot channel and a sync channel. The terminal 70 may then enter a waiting state. In the waiting state, the terminal 70 can receive system parameters through the sync channel and respond to various messages including calls.

If desiring Internet access, users of the terminal 70 may try to access a desired site by invoking an Internet accessing menu on an LCD panel 74 using a key pad 73. Other types of display panels may also be used. The base station system unit 72 may receive an Internet access signal from the terminal 70 and access a corresponding Internet site server 75. The base station system unit 72 may receive necessary information including certificate information from the server 75 and deliver the information to the terminal 70. The terminal 70 may display a certification screen on the LCD panel 74 based on the received signal from the Internet server 75. The user of the terminal 70 may enable the Internet server 75 to perform a certification of the terminal 70 by providing authenticating information requested by the server 75. The authenticating information may include a registered ID (identity) and/or a password for the site, for example. After completing the certificate, the terminal 70 may obtain and use information from the Internet site. Other authentication information may also be used.

In case of a certification scheme based on passwords for wireless Internet access, the users must remember their passwords. However, since users forget their passwords, the certification scheme may be used for certification not requiring a strict safety. Further, in the case of a certification scheme based on a public key certificate, mobility of the wireless Internet access may be reduced because the certificate must be stored in a stationary terminal.

Certification schemes may utilize a public/private key pair authenticated by an official certificate authority or a certificate.

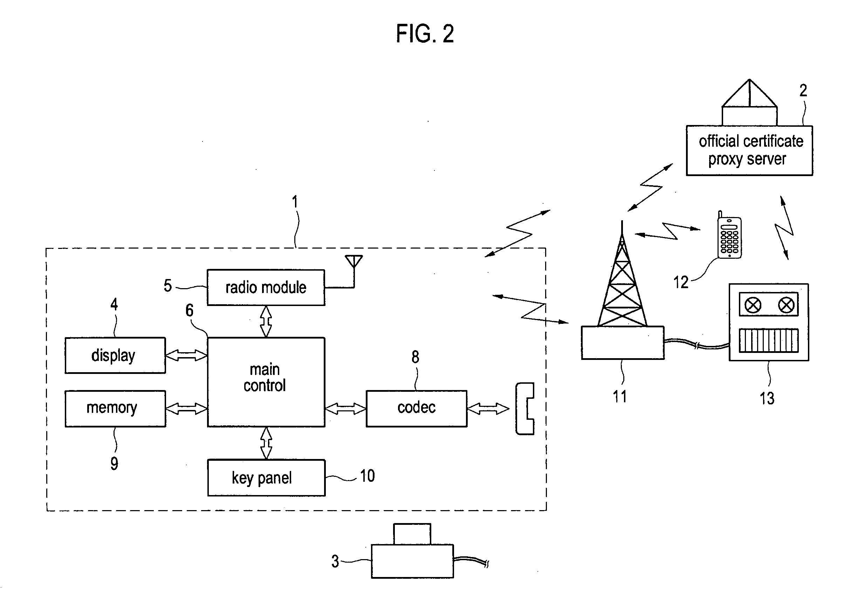

FIG. 2 illustrates a mobile communication system to create an instant key for using wireless Internet access according to an example embodiment of the present invention. Other embodiments and configurations are also within the scope of the present invention.

The mobile communication system may include a mobile communication terminal 1, an official certificate proxy server 2, a base station system unit 11 and an Internet site server 13. FIG. 2 also shows a stationary terminal 3 and another terminal 12. Each of these features shown in FIG. 2 may or may not be required.

The mobile communication terminal 1 may include various components such as a display device 4, a radio module device 5, a main control device 6, a transceiver 7, a codec device 8, a memory device 9 and a key panel 10. Other components are not shown in FIG. 2 for ease of illustration.

The mobile communication terminal 1 may include authenticating information. For example, the authenticating information may include a coded public/private key pair and a certificate. The official certificate proxy server 2 may perform certification of the mobile communication terminal 1 using the authenticating information and a certificate of the Internet site server 13 to which the mobile communication terminal 1 requests access. The official certificate proxy server 2 may create an instant key (or safety key) for wireless Internet usage based on the authenticating information stored in the mobile communication terminal 1. The official certificate proxy server 2 may transmit the instant key to the mobile communication terminal 1. The mobile communication terminal 1 may store the instant key for wireless Internet access. The instant key may be shared by the Internet site server 13 and the mobile communication terminal 1.

The mobile communication terminal 1 may receive the authenticating information from an official certificate authority (not shown) by accessing the official certificate authority via the terminal 3 and providing private information regarding the mobile communication terminal 1 and/or the user of the terminal 1 (or terminal 3). The terminal 3 may be a stationary terminal located external to the mobile communication terminal 1. The stationary terminal 3 may include a personal computer (PC) or a notebook computer, for example. The authenticating information may include a public/private key pair (ID/PASSWORD) and/or a certificate. The mobile communication terminal 1 may download and store the authenticating information to the memory device 9 according to a wire/wireless operation such as IrDA, RF channel, Bluetooth and/or USB operations. The memory device 9 may also store various information of the mobile communication terminal 1.

During movement, if a user desires to access an Internet site via the stationary terminal 3 at a certain place, the user may execute a menu for certification embedded in the mobile communication terminal 1. The mobile communication terminal 1 may establish a wireless connection to the official certificate proxy server 2 under control of the main control device 6 via the stationary terminal 3 and enable a certification and electronic signature process for the terminal 1 by transmitting the authenticating information (stored in the memory device 9) and information about the desired Internet site.

The mobile communication terminal 1 may include the display device 4 mounted on the body of the terminal 1, the wireless module device 5 for processing a wireless call signal received/transmitted in the mobile communication terminal 1 and the main control device 6. The display device 4 may display a certification procedure screen and various internal information signals. The wireless module device 5 may establish a wireless connection to the official certificate proxy server 2 and enable the server 2 to perform certification of the terminal 1. In response to the certification (i.e., receiving the certificate), the wireless module device 5 may receive the instant key issued from the official certificate proxy server 2.

The main control device 6 may control operations of the mobile communication terminal 1 as well as the memory device 9, the wireless module device 5 and the display device 4. The main control device 6 may enable the received instant key to be indicated on the display device 4. The mobile communication terminal 1 may include the transceiver 7 and the codec device 8. According to a call control signal from the main control device 6, the codec device 8 may convert an analog voice signal inputted from the transceiver 7 to a digital signal and/or vice versa. The main control device 6 may be connected to a key panel 10 that allows users to input a function setting signal to the main control device 6.

A user of the mobile communication terminal 1 may access the Internet server 13 via the stationary terminal 3 (e.g. a PC) and use information from the Internet server 13 after completing the certification based on the instant key.

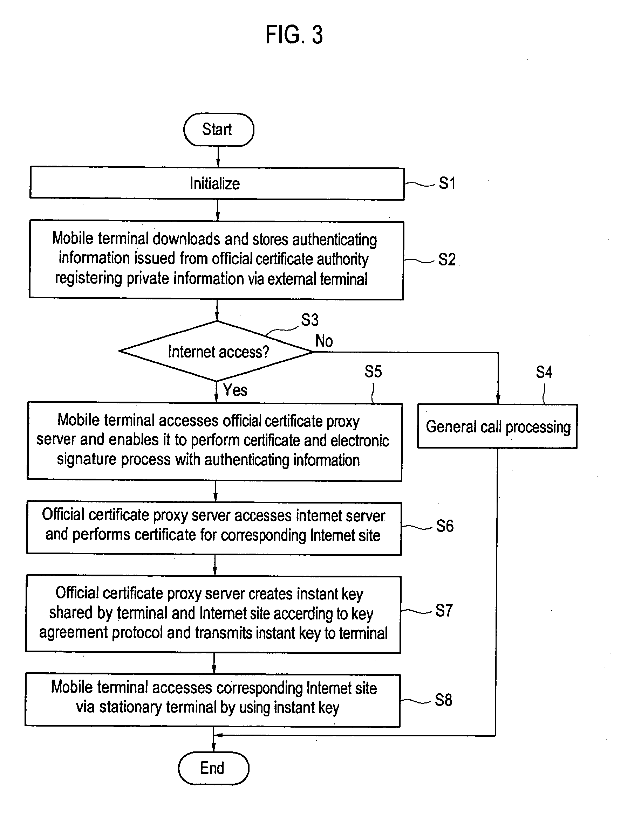

A wireless Internet access method of the mobile communication system will now be described. FIG. 3 is a flow chart showing a wireless Internet access method performed in a mobile communication system (such as the system of FIG. 2) according to an example embodiment of the present invention. Other operations, orders of operations and embodiments are also within the scope of the present invention.

As shown in FIG. 3, when power is applied to the mobile communication terminal 1, an initialization of the mobile communication terminal 1 may begin in operation S1 under control of the main control device 6 so as to establish information in the internal memory device 9. After the initialization, the process may continue to operation S2 where the mobile communication terminal 1 may provide private information to an official certificate authority via an external terminal and then download and store the authenticating information issued from the official certificate authority. After the operation S2, the process may continue to operation S3 where the mobile communication terminal 1 may confirm whether a newly provided request is for Internet site access. Operation S3 may also be considered a waiting operation (or an Internet access request confirming operation).

At the waiting operation S3, if the newly provided request is not for Internet site access, then the process may continue to a general call process operation S4. More specifically, at the waiting operation S3, if there is a general call request from a user (i.e., if a user inputs a telephone number via the key panel 10 and presses a button for calling), then the main control device 6 of the terminal 1 may recognize the pressing of the button and store the telephone number inputted by the user in the memory device 9. The main control device 6 may also enable the wireless module device 5 to access the base station system unit 11 via an access channel. The base station system unit 11 may establish a call link by processing the call transmitted from the terminal 1 and transmitting the processed call to another terminal 12. If the user of the terminal 1 inputs a voice signal via the transceiver 7, the codec device 8 of the terminal 1 may process the inputted voice signal and output the result to the wireless module device 5. The wireless module device 5 controlled by the main control device 6 in the terminal 1 may perform radio processing for the input voice signal and may deliver the result to the other terminal 12 via the base station system unit 11. The general call process may thereby be achieved.

Alternatively, if an Internet site access is requested from the mobile communication terminal 1 in the waiting operation S3, then the process may continue to a terminal certification operation S5. At the terminal certification operation S5, the mobile communication terminal 1 may access the official certificate proxy server 2 and enable the server 2 to perform a certificate and electronic signature process based on the authenticating information stored in the mobile communication terminal 1.

The terminal certification operation S5 may include a proxy setting operation for certification when a plurality of official certificate authorities may authorize the official certificate proxy server 2 to execute the certificate for the authenticating information.

After the terminal certification operation S5, the process may continue to an Internet site certification operation S6 where the official certificate proxy server 2 may access an Internet server of the desired Internet site and perform a certification process for the corresponding Internet site. The certification processes for the terminal and the Internet site may be complete after the certification of the Internet site. The process may continue to an instant key creation operation S7 where the official certificate proxy server 2 may create the instant key shared by the mobile communication terminal 1 and the Internet site server 13 according to a key agreement protocol. The official certificate proxy server 2 may transmit the instant key to the mobile communication terminal 1.

At the instant key creation operation S7, time stamp data relating to an effective term of the instant key may be transmitted to the mobile communication terminal 1 and the requested Internet site server 13 by the official certificate proxy server 2.

After the instant key creation operation S7, the process may continue to an Internet access operation S8 where the mobile communication terminal 1 accesses the corresponding Internet site via the stationary terminal 3 by using the received instant key. Since the Internet site server 13 and the stationary terminal 3 share the instant key issued and certified by the official certificate proxy server 2, then the Internet site server 13 and the terminal 3 may share information without any other certification.

The mobile communication terminal may store authenticating information certificated by an official certificate authority. When Internet access is requested, the mobile communication terminal may access an official certificate proxy server and receive an instant key by using the stored authenticating information. The terminal may then access the Internet site. As such, security of the certificate key may be improved.

The mobile communication terminal may store the authenticating information in the terminal and may use the information at any time and in any place to receive an instant key for Internet site access without storing the authenticating information in a stationary terminal. Therefore, Internet access can be rapidly achieved and the certificate can be used simply and easily regardless of the place for storing the certificate.

Embodiments of the present invention may provide a mobile communication terminal and a wireless Internet access method for providing increased security for wireless Internet access. The mobile communication terminal may access an Internet site with an instant key that has a modifiable value at each time and that is issued by using authenticating information stored in the terminal.

A mobile communication apparatus for a wireless Internet environment may be provided. The mobile communication apparatus may include a memory device (or unit), a display device, a radio module device (or unit) and a main control device (or unit). The memory device may store authenticating information transmitted from outside the mobile communication apparatus. The radio module device may be adapted to access an official certificate proxy server that performs certification of the apparatus with the authenticating information to create the instant key. The radio module device may receive the instant key for wireless Internet access from an official certificate proxy server. The main control device may control the memory device, the radio module device and the display device.

A wireless Internet access method performed in a mobile communication terminal may also be provided. According to the wireless Internet access, the mobile communication terminal may store authenticating information issued from an official certificate authority and access an official certificate proxy server. The mobile communication terminal may receive an instant key created by the official certificate proxy server and may access an Internet site based on the instant key shared by the mobile communication terminal and the Internet site. The official certificate proxy server may perform certification of the mobile communication terminal based on the stored authenticating information and, after accessing the Internet site, the official certificate proxy server may perform certification of the Internet site.

A mobile communication system may also be provided to provide wireless Internet access service. The mobile communication system may include a mobile communication terminal and an official certificate proxy server. The mobile communication terminal may store authenticating information and may be adapted to request access to an Internet server. The official certificate proxy server may be adapted to create an instant key shared by the mobile communication terminal and the requested Internet site after performing certification of the mobile communication terminal with the authenticating information and performing certification of the Internet site. The official certificate proxy server may transmit the instant key to the mobile communication terminal.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile communication apparatus for using in a wireless Internet environment, comprising:
a memory device to store authenticating information;
a display device;
a radio module device to access a certificate proxy server and to receive a key for wireless Internet access from the certificate proxy server; and
a main control device to control the memory device, the radio module device and the display device.

2. The apparatus of claim 1, wherein the authenticating information includes a public/private key pair and certificate information.

3. The apparatus of claim 1, wherein the authenticating information is downloaded from a stationary terminal to the mobile communication apparatus.

4. The apparatus of claim 1, wherein the authenticating information is issued from a certificate authority and is downloaded to the mobile communication apparatus.

5. The apparatus of claim 1, wherein the radio module device accesses the certificate proxy server and processes mobile call signals transmitted to or received from the mobile communication apparatus.

6. The apparatus of claim 1, wherein the display device indicates the received key under control of the main control device.

7. The apparatus of claim 1, wherein the main control device includes an input key panel to enable a user to input a function setting signal.

8. The apparatus of claim 1, wherein the certificate proxy server creates the key by performing certification of the mobile communication apparatus based on the authenticating information.

9. The apparatus of claim 1, wherein the key includes time stop information relating to an effective term of the key.

10. The apparatus of claim 1, wherein the radio module device accesses a desired Internet site using the key.

11. A wireless Internet access method comprising:
storing authenticating information issued from a certificate authority at a mobile communication terminal;
receiving a key from a certificate proxy server; and
the mobile communication terminal accessing an Internet site based on the key shared by the mobile communication terminal and the Internet site.

12. The method of claim 11, further comprising the certificate proxy server certifying the mobile communication terminal based on the stored authenticating information.

13. The method of claim 11, wherein receiving the key includes the certificate proxy server creating the key according to a key agreement protocol.

14. The method of claim 11, wherein the certificate proxy server is authorized by a plurality of certificate authorities to execute certification based on the authenticating information.

15. The method of claim 11, wherein receiving the key includes transmitting time stamp information regarding an effective term of the key from the certificate proxy server to the mobile communication terminal and the Internet site.

16. The method of claim 11, wherein the authenticating information includes a public/private key pair and certificate information.

17. The method of claim 11, further comprising receiving the authenticating information from the certificate authority.

18. A mobile communication system providing wireless Internet access, comprising:
a mobile communication terminal to store authenticating information and to request access to an Internet site; and
an official certificate proxy server to create an instant key shared by the mobile communication terminal and the requested Internet site after certifying the mobile communication terminal using the authenticating information.

19. The mobile communication system of claim 18, wherein the official certificate proxy server certifies the Internet site.

20. The mobile communication system of claim 18, wherein the authenticating information includes a public/private key pair and certificate information.

21. The mobile communication system of claim 18, further comprising an official certificate authority to provide the authentication information to the mobile communication terminal.
